# EUROPEAN PATENT APPLICATION

(11) **EP 4 507 343 A1**
(43) Date of publication of application: **12.02.2025**
(21) Application number: 23190801.3
(22) Date of filing: 10.08.2023
(51) Int. Cl.: H04W 4/38, H04W 4/44, B60W 60/00, G08G 1/16, G08G 1/01, H04W 4/02

(54) **METHOD OF CENTRAL SENSOR AUGMENTATION**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

There is provided a computer implemented method of central sensor augmentation. The method comprises receiving a first perception message from a first computing device comprised in a first mobile entity (10), wherein the first perception message is generated by a perception subsystem of the first mobile entity (10), and wherein the first perception message comprises at least a location of the first mobile entity (10), and a representation of a field of view (11) of at least one sensor of the first mobile entity (10). Further, the method comprises receiving a second perception message from a second computing device comprised in a second mobile entity (20), wherein the second perception message is generated by a perception subsystem of the second mobile entity (20), and wherein the second perception message comprises at least a location of the second mobile entity (20), and a representation of a field of view of at least one sensor of the second mobile entity (20). Further, the method comprises updating first and second virtual mobile entity environment models of the first and second mobile entities using at least the sensor data comprised in the first and second perception messages, respectively. Further, the method comprises incorporating at least the first and second virtual mobile entity environment models into a unified environment model; wherein the first and second virtual mobile entity environment models are registered to a common coordinate system. Further, the method comprises generating, for at least the first computing device, a representation of an augmented field of view in the unified environment model comprising at least a portion of the representation of the field of view obtained by the at least one sensor of the second mobile entity (20). Further, the method comprises transmitting, to the first computing device, a message comprising at least the portion of the representation of the field of view obtained by the sensor of the second mobile entity (20) used in the representation of the augmented field of view.

## Description

### Technical Field

The present application relates to a computer-implemented method of central sensor augmentation based on receiving first and second perception messages and generating a representation of an augmented field of view, associated computer devices, computer program product and computer readable medium.

### Background

Industry 4.0 refers to an advanced convergence of technologies that enables comprehensive digitization and interlinkage of industrial processes. The central element of this fourth industrial development are so-called "digital twins". These represent virtual images of real-world physical systems and provide a real-world representation of time and data of their real counterparts. Through the continuous collection and analysis of real-time data, digital twins can enable comprehensive optimization and monitoring of real processes.

The introduction and implementation of 5G technology plays a significant role in the implementation of Industry 4.0 concepts. 5G offers significantly higher bandwidth, lower latency, and greater capacity compared to its predecessors. Due to these features, 5G enables almost instantaneous real-time communication between the digital twins and the physical systems. The fast and reliable transmission of large amounts of data in real-time opens up new possibilities for companies to have precise controls, predictive maintenance, and the implementation of remote operations.

The concepts of the "digital twin" and 5G technology, will also play a major role in the field of autonomous driving in the future.

For autonomous driving functions and safety and awareness functions, mobile entities use an environment model. This environment model may be a description of the surroundings of the mobile entity of interest. The standardized Cooperative Perception Service (CPS) and the Cooperative Perception Message (CPM) is one way to operate this perception information sharing. One new concept within the vehicular communication community is V2N2X, in which V2X messages are sent with the support of the 5G network. In the case of perception, this means that an equivalent message to CPM is sent through the 5G network using a V2N2X server that is taking care of the addressing and routing of the information. Further techniques are necessary to further improve information sharing in the field of autonomous and/or assisted driving.

### Summary

According to a first aspect, there is provided a computer implemented method of central sensor augmentation. The method comprises receiving a first perception message from a first computing device comprised in a first mobile entity, wherein the first perception message is generated by a perception subsystem of the first mobile entity, and wherein the first perception message comprises at least a location of the first mobile entity, and a representation of a field of view of at least one sensor of the first mobile entity. Further, the method comprises receiving a second perception message from a second computing device comprised in a second mobile entity, wherein the second perception message is generated by a perception subsystem of the second mobile entity, and wherein the second perception message comprises at least a location of the second mobile entity, and a representation of a field of view of at least one sensor of the second mobile entity. Further, the method comprises updating first and second virtual mobile entity environment models of the first and second mobile entities using at least the sensor data comprised in the first and second perception messages, respectively. Further, the method comprises incorporating at least the first and second virtual mobile entity environment models into a unified environment model; wherein the first and second virtual mobile entity environment models are registered to a common coordinate system. Further, the method comprises generating, for at least the first computing device, a representation of an augmented field of view in the unified environment model comprising at least a portion of the representation of the field of view obtained by the at least one sensor of the second mobile entity. Further, the method comprises transmitting, to the first computing device, a message comprising at least the portion of the representation of the field of view obtained by the sensor of the second mobile entity used in the representation of the augmented field of view.

According to a second aspect, there is provided a computer implemented method of peripheral sensor augmentation. The method comprises generating a first perception message from a first computing device comprised in a first mobile entity, wherein the first perception message is generated by a perception subsystem of the first mobile entity, and wherein the first perception message comprises at least a location of the first mobile entity, and a representation of a field of view of at least one sensor of the first mobile entity. Further, the method comprises transmitting the first perception message to a host device comprising a central sensor augmentation application. Further, the method comprises receiving, at the first computing device, a message comprising at least a portion of a representation of a field of view obtained by at least one sensor of a second mobile entity and/or an update of an environment model. Further, the method comprises generating a control signal associated with a driving action of the first mobile entity using at least the message comprising at least the portion of the representation of the field of view obtained by the at least one sensor of the second mobile entity.

According to a third aspect, there is provided a computing device. The computing device comprises at least one sensor comprising a representation of a field of view in a physical environment, a perception subsystem, a processor, and a first communication interface configured to be connected to a first radio transmitter. The perception subsystem is configured to obtain sensor measurements from the at least one sensor, and to generate a perception message comprising at least a location of a first mobile entity, and a representation of a field of view of at least one sensor of the first mobile entity. The first communication interface is configured to transmit the perception message to a host device comprising a central sensor augmentation application. The first communication interface is configured to receive a message comprising at least a portion of a representation of a field of view obtained by at least one sensor of a second mobile entity. The processor is configured to generate a control signal associated with a driving action of the first mobile entity using at least the message comprising at least the portion of the representation of the field of view obtained by the at least one sensor of the second mobile entity.

According to a fourth aspect, there is provided a remote computing device. The computing device comprises a processor and a second communication interface configured to be connected to a second radio transmitter. The second communication interface is configured to receive a first perception message from a first computing device comprised in a first mobile entity. The first perception message is generated by a perception subsystem of the first mobile entity. The first perception message comprises at least a location of the first mobile entity, and a representation of a field of view of at least one sensor of the first mobile entity. The second communication interface is configured to receive a second perception message from a second computing device comprised in a second mobile entity, wherein the second perception message is generated by a perception subsystem of the second mobile entity, and wherein the second perception message comprises at least a location of the second mobile entity, and a representation of a field of view of at least one sensor of the second mobile entity. The processor is configured to update first and second virtual mobile entity environment models of the first and second mobile entities using at least the sensor data comprised in the first and second perception messages, respectively. The processor is configured to incorporate at least the first and second virtual mobile entity environment models into a unified environment model. The first and second virtual mobile entity environment models are registered to a common coordinate system. The processor is configured to generate a representation of an augmented field of view in the unified environment model comprising at least a portion of the representation of the field of view obtained by the at least one sensor of the second mobile entity. Further, the second communication interface is configured to transmit, to the first computing device, a message comprising at least the portion of the representation of the field of view obtained by the sensor of the second mobile entity used in the representation of the augmented field of view.

According to a fifth aspect, there is provided a computer program product comprising instructions which, when the program is executed by a processor, cause the processor to carry out the method of the first aspect and/or the second aspect.

According to a sixth aspect, there is provided a computer-readable medium comprising instructions which, when executed by a processor, cause the processor to carry out the method of the first aspect and/or the second aspect.

An effect of the foregoing aspects may be seen in that the perception data may be collected in a central entity that is located in the network and may be able to perform large scale fusion of pooled information. This may help to further enhance the safety level in the context of assisted and/or autonomous driving. The possibility to provide the perception systems of the mobile entity with additional information gathered from other mobile entities may enable a more detailed analysis of a required driving actions and leads to decision-making based on broader knowledge. This can prevent induvial road users from being overlooked or obstructed, or, for example, restrict their right of way when turning. Furthermore, the captured data can be further analysed, and autonomous system can be trained on more traffic situations to further enhance safety in traffic. Another advantage of the techniques disclosed herein can be seen in the fact that the flow of traffic can be improved if more mobile entities can receive more information about other mobile entities and thus be better coordinated and, if necessary, mutual blockages can be prevented. Furthermore, the techniques described herein allow for the targeted retrieval of specific data from the unified environment model in order to close known and unknown knowledge gaps, in order to make better decisions in traffic. The targeted queries may reduce the data volume to be transmitted and enable accelerated transmission.

### Brief Description of the Drawings

Exemplary embodiments are depicted in the figures, which are not to be construed as limiting the claims, and are explained in greater detail below. Where possible, like reference numerals denote analogous or like features in different figures.
- **Fig. 1**: schematically illustrates a computer-implemented method of central sensor augmentation.
- **Fig. 2-A**: schematically illustrates an exemplary traffic situation from aerial view.
- **Fig. 2-B**: schematically illustrates a unified environment model of the exemplary traffic situation of Fig. 2-A.
- **Fig. 3-A**: schematically illustrates a first virtual mobile entity environment model according to the first aspect.
- **Fig. 3-B**: schematically illustrates a second virtual mobile entity environment model according to the first aspect.
- **Fig. 3-C**: schematically illustrates a unified environment model according to the first aspect.
- **Fig. 4**: schematically illustrates a communication network.

### Detailed Description

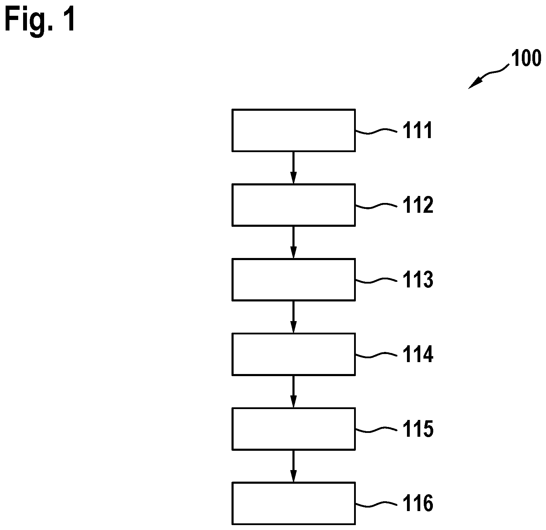

**Fig. 1** schematically illustrates a computer-implemented method of central sensor augmentation.

According to the first aspect, the computer implemented method 100 of central sensor augmentation comprises receiving 111 a first perception message from a first computing device comprised in a first mobile entity 10. The first perception message is generated by a perception subsystem of the first mobile entity 10, and wherein the first perception message comprises at least a location of the first mobile entity 10, and a representation of a field of view 11 of at least one sensor of the first mobile entity 10. Further, method 100 comprises receiving 112 a second perception message from a second computing device comprised in a second mobile entity 20, wherein the second perception message is generated by a perception subsystem of the second mobile entity 20, and wherein the second perception message comprises at least a location of the second mobile entity 20, and a representation of a field of view 21 of at least one sensor of the second mobile entity 20. Further, the method 100 comprises updating 113 first 12 and second virtual mobile entity environment models 22 of the first 10 and second mobile entities 20 using at least the sensor data comprised in the first and second perception messages, respectively. Further, the method 100 comprises incorporating 114 at least the first 12 and second virtual mobile entity environment models 22 into a unified environment model 32 wherein the first 12 and second virtual mobile entity environment models 22 are registered to a common coordinate system. Further, the method 100 generating 115, for at least the first computing device, a representation of an augmented field of view in the unified environment model 32 comprising at least a portion of the representation of the field of view obtained by the at least one sensor of the second mobile entity 20. Further, the method comprises transmitting 116, to the first computing device, a message comprising at least the portion of the representation of the field of view 21 obtained by the sensor of the second mobile entity 20 used in the representation of the augmented field of view.

The first mobile entity and/or the second mobile entity may comprise a vehicle, a mobile device such as a smartphone, tablet computer, notebook, and/or virtual reality glasses, automated guided vehicle (AGV), a bicycle, and/or a mobile robot. The representation of the field of view of the at least one sensor of the first mobile entity 10 or the second mobile entity 20 may comprise a virtual representation of all physical parameters and/or quantities captured by the respective sensor. The at least one sensor of the first mobile entity 10 and/or the at least one sensor of the second mobile entity 20 may comprise a LiDAR (Light Detection and Ranging) sensor, camera, radar system, ultrasonic sensor, IMU (Inertial Measurement Units). The perception subsystem of the first mobile entity 10 and/or the perception subsystem of the second mobile entity 20 may comprise techniques to enhance sensor-based perception of the environment of the respective mobile entity. In examples, the perception subsystem of the first mobile entity 10 and/or the perception subsystem of the second mobile entity 20 may comprise sensor fusion algorithms configured to combine data from multiple sensors of the first mobile entity 10 or the second mobile entity 20. The location of the first mobile entity 10 and/or the location of the second mobile entity 20 may be determined using GPS (Global Position Systems), a Wi-Fi receiver, a mobile communication chip configured to receive a cell-id of a mobile communication network, an air pressure sensor and/or any other suitable system comprised in the perception subsystem of the first mobile entity 10 and/or the second mobile entity 20 to capture the environment of the respective mobile entity. In examples, the computer-implemented method may be executed on a remote computing device such as a server.

Although this specification refers to identifying the locations of the first mobile entity 10 and the second mobile entity 20, the term "location" may also be considered as an "area" or "sector" of the environment, to allow for less accurate sensing modalities.

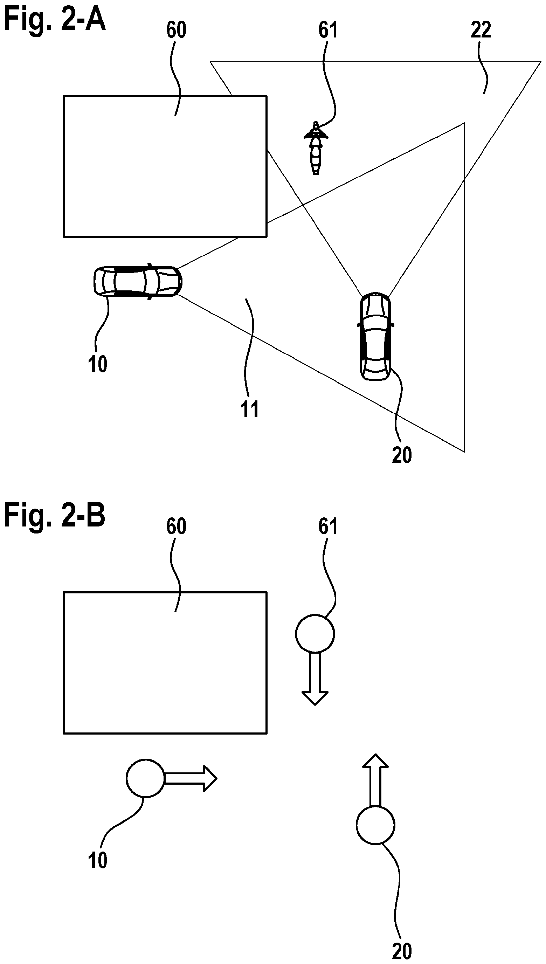

As shown in **Fig. 2-A****,** the sensor of the first mobile entity 10 and/or the second mobile entity 20 may cover one or more specific areas around the mobile entity, respectively. Justified by the line of sight, it may be the case that geographical or urban conditions such as buildings, signs, or other obstacles 60 restrict the field of view 11 of the sensor of the first mobile entity 10. This may lead to a lack of information that can make decision-making in the mobile entity's driving behavior more difficult. The sensor of the second mobile entity 20 may have a field of view 22 that covers a specific area not captured by the sensor of the first mobile entity 20. The sensor data comprised in the second perception message from the second computing device comprised in the second mobile entity 20 may be advantageous for the first mobile entity 10 in order to determine a driving action. In the example of **Fig. 2-A** the bike is in a blind spot of the at least one sensor of the first mobile entity 10.

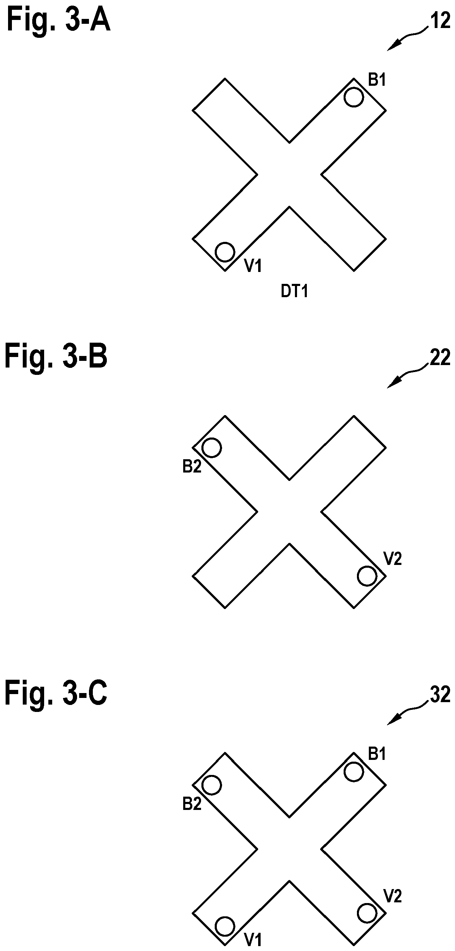

The updating 113 first 12 and second mobile entity environment models 22 of the first 10 and second 20 mobile entities using at least the sensor data comprised in the first and second perception message, respectively, may comprise generating a new first virtual mobile entity environment model 12 and/or second virtual mobile entity environment model 22 or amending an existing first 12 and/or second virtual mobile entity environment model 22 using at least the sensor data comprised in the first and second perception message, respectively. **Fig. 3-A** schematically illustrates the first virtual mobile entity environment model 12. **Fig 3-B** schematically illustrates the second virtual mobile entity environment model 22. In examples, the first virtual mobile entity environment model 12 and/or the second virtual mobile entity environment model 22 may comprise any kind of 3D models. In examples, the first virtual mobile entity environment model 12 and/or the second virtual mobile entity environment model 22 may comprise 3D representations of the first mobile entity 10 and/or the second mobile entity 20, respectively. In examples, the first virtual mobile entity environment model 12 and/or the second virtual mobile entity environment model 22 may comprise 3D representations of the field of view 11 of the first mobile entity 10 and the field of view 21 of the second mobile entity 20, respectively. In examples, the first virtual mobile entity environment model 12 and/or the second virtual mobile entity environment model 22 may comprise 3D representations of the environment of the first mobile entity 10 and/or the second mobile entity 20, respectively. In examples, the first virtual mobile entity environment model 12 and/or the second virtual mobile entity environment model 22 may comprise a CAD model, a finite element analysis (FEA) model, and/or a 3D point cloud. In examples, the first virtual mobile entity environment model 12 and/or the second virtual mobile entity environment model 22 may comprise a 2D map comprising the 2D virtual representations of the first mobile entity 10 and/or the second mobile entity 20, and optionally, a 2D representation of the respective environment. In examples, the first virtual mobile entity environment model 12 may comprise a digital twin of the first mobile entity 10 and/or the representation of the field of view 11 of the first mobile entity 10. In examples, the second virtual mobile entity environment model 22 may comprise a digital twin of the second mobile entity 20 and/or the representation of the field of view 21 of the second mobile entity 20. In examples, the first virtual mobile entity environment model 11 and/or the second virtual mobile entity environment model 21 may comprise meta data such as velocity, acceleration, motion vectors, orientation of the first mobile entity 10 and the second mobile entity 20, respectively.

The incorporating 114 at least the first virtual mobile entity environment model 12 and second virtual mobile entity environment model 22 into a unified environment model 32 may comprise fusing the first virtual mobile entity environment model 12 and the second virtual mobile entity environment model 22 to create a model of the environment including both sensor data of the first mobile entity 10 and the second mobile entity 20. **Fig. 3-C** schematically illustrates a unified environment model 32 resulting from incorporating the first virtual mobile entity environment model 12 as shown in **Fig. 3-A** and the second virtual mobile entity environment model 22 as shown in **Fig. 3-B****.**

In examples, unified environment model 32 may comprise any kind of 3D models. In examples, the unified environment model 32 may comprise 3D representations of the first mobile entity 10 and/or the second mobile entity 20. In examples, the unified environment model 32 may comprise 3D representations of the environment of the first mobile entity 10 and/or the second mobile entity 20. In examples, the unified environment model 32 may comprise a CAD model, a finite element analysis (FEA) model, and/or 3D point cloud. In examples, the unified environment model 32 may comprise a 2D map comprising the 2D virtual representations of the first mobile entity 10 and/or the second mobile entity 20, and optionally, a 2D representation of the environment. In examples, the unified environment model 32 may comprise a digital twin. In examples, the unified environment model 32 may comprise 2D representations of the field of view 11 of the first mobile entity 10 and/or the field of view 21 of the second mobile entity 20, respectively. In examples, the unified environment model 32 may comprise 3D representations of the field of view 11 of the first mobile entity 10 and/or the field of view 21 of the second mobile entity 20, respectively. In examples, the unified environment model may comprise a digital twin of the first mobile entity 20 and/or the representation of the field of view 11 of the first mobile entity 10. In examples, the unified environment model may comprise a digital twin of the second mobile entity 20 and/or the representation of the field of view 21 of the second mobile entity 20. In examples, the first virtual mobile entity environment model 11 and/or the second virtual mobile entity environment model 21 may comprise meta data such as velocity, acceleration, motion vectors, orientation of the first mobile entity 10 and the second mobile entity 20, respectively.

In examples, the first mobile entity virtual model 12 and the second mobile entity virtual model 22 are registered to a common coordinate system. In examples, the unified environment model 32 may define or may comprise a common coordinate system. In examples, the common coordinate system may be a world coordinate system. In examples, the unified environment model 32 may be oriented inside the common coordinate system. In examples, the first virtual mobile entity environment model 12 and the second virtual mobile entity environment model 22 may be oriented inside the common coordinate system. In examples, the common coordinate system may be a 3D or 2D coordinate system.

In examples, generating 115 a representation of an augmented field of view in the unified environment model 32 comprising at least a portion of the representation of the field of view 21 obtained by the at least one sensor of the second mobile entity 20 may comprise extending the representation of the field of view 11 with information associated with the second virtual mobile entity environment model 22. In examples, the representation of the augmented field of view may comprise the entire representation of the field of view 21 obtained by the at least one sensor of the second mobile entity 20. The representation of the augmented field of view may comprise any information or data included in the unified environment model 32. In examples, the representation of the augmented field of view may comprise at least portions of the unified environment model 32. In examples, the representation of the augmented field of view may be associated with the representation of the field of view 11 obtained by the at least on sensor of the first mobile entity 10. In examples, transmitting 116 the message comprising at least the portion of the representation of the field of view 21 obtained by the sensor of the second mobile entity 20 used in the representation of the augmented field of view may comprise transmitting at least a portion of the unified environment model 32. In examples, transmitting 116 the message to the first computing device may comprise transmitting the entire unified environment model 32. In examples, transmitting 116 the message to the first computing device may comprise transmitting exclusively or in addition the representation of the augmented field of view.

**Fig. 2-B** schematically illustrates an example of the unified environment model 32 of the exemplary traffic situation of **Fig. 2-A****.** In the example of **Fig. 2-B** the bike may be recognizable by the perception subsystem of the first mobile entity 10 thanks to the message comprising at least the portion of the representation of the field of view 21 obtained by the sensor of the second mobile entity 20.

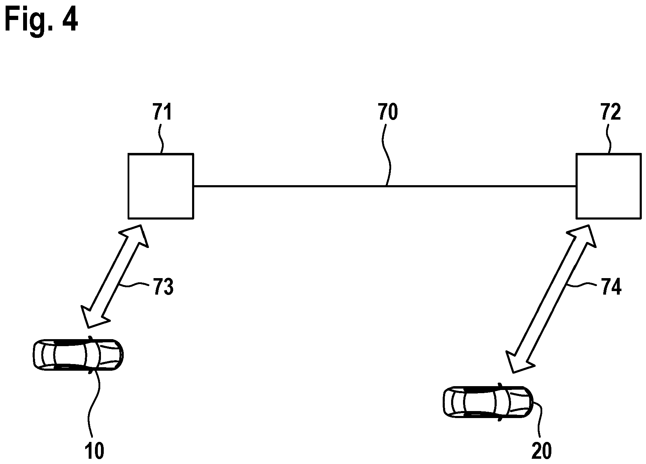

**Fig. 4** schematically illustrates a communication network. In examples, the computer implemented method 100 of central sensor augmentation may be performed using 5G technology. In examples, the computer-implemented method may be executed on a remote computing device such as a server and/or may be a service in a 5G core network 70 or may be linked to a 5G core network. In examples, the computer implemented method of central sensor augmentation may be part of a Sensing Management Function (SeMF). The computer implemented method of central sensor augmentation may be implemented in the context of the 3GPP standard. Transmitting 116 the message to the first computing device may be based on 5G Radio Access Network (RAN). As shown in **Fig. 4****,** the first computing device of the first mobile entity 10 may be configured to send the first perception message via a first 5G RAN link 73 to a first base station 71 linked with the 5G core network 70. The second computing device of the second mobile entity 20 may be configured to send the second perception message via the second 5G RAN link 74 to a second base station 72 linked with the 5G core network 70. In examples, the first perception message and the second perception message may each be comprised in a V2X message (mobile entity-to-everything message).

According to an embodiment, the computer implemented method 100 may comprise receiving an augmentation request message from the first computing device of the first mobile entity 10. In examples, the augmentation request message may comprise a first augmentation definition associated with a boundary of a desired representation of the augmented field of view of the first mobile entity 10. Further, the method may comprise interrogating the unified environment model 32 to identify whether a portion of the representation of the field of view 21 obtained by the at least one sensor of the second mobile entity 20 can be combined with the representation of the field of view 11 of the at least one sensor of the first mobile entity 10 to thus at least partially satisfy the augmentation definition. Further, the method may comprise if the augmentation definition can be at least partially satisfied: transmitting a first augmentation data message to the first computing device, wherein the first augmentation data message comprises the portion of the representation of the field of view 21 obtained by the at least one sensor of the second mobile entity 20. In examples, the first augmentation data message may comprise at least a portion of the unified environment model 32. In examples, the first augmentation data message may comprise the entire unified environment model 32. In examples and as shown in **Fig. 4****,** the first mobile entity 10 may be configured to receive the first augmentation data message via the 5G RAN link 73.

For example, using a video camera as at least one sensor of the first mobile entity 10 may permit a wide field of view across a road junction (for example and as shown in **Fig. 2-A**) to be captured in near-real time. With appropriate image processing, the signal from a video camera can capture the arrangement of buildings, trees, and roads relevant to computing a driving action. For example, the video camera may be a stereoscopic camera permitting 3D depth estimation of features (such as RF reflecting walls or RF absorbing trees). By applying relevant image recognition algorithms, the signal from a video camera enables the identification of items in video camera's field of view. For example, image recognition may enable identification of specific models of other mobile entities, buildings or roadside units (RSUs). According to an embodiment, the first computing device may be configured to detect an obstacle in the field of view of the at least one sensor of the first mobile entity 10. In examples the first computing device may be configured to generate the augmentation request definition based on the detection of an obstacle in the field of view 11 of the at least one sensor. In examples, the computing device may be configured to detect the obstacle 60 in the field of view 11 and may be configured to decide that that the area hidden by the detected obstacle may be relevant for decision-making in the context of computing a driving action. As shown in **Fig. 2-A** the exemplary bike 61 may be relevant for computing a turning action. In examples, the first computing device may be configured to detect the obstacle 60 using one or more of ray tracing algorithms, advanced object detection algorithms such as Haar Cascades or techniques based on Convolutional Neural Networks (CNN), depth image or depth-map-based methods comprising distance information for various points in the captured scene, distance to objects measurements using 3D point clouds generated by LiDAR and/or any other kind of machine learning methods.

According to an embodiment, the computer-implemented method 100 may comprise receiving, from the second computing device of the second mobile entity 20, an augmentation push request to the first mobile entity 10. In examples, the augmentation push request comprises a second augmentation definition associated with a boundary of a desired representation of the augmented field of view of the first mobile entity 10. Further, the method may comprise interrogating the unified environment model to identify whether a portion of the representation of the field of view 21 obtained by the at least one sensor of the second mobile entity 20 can be combined with the representation of the field of view 11 of the at least one sensor of the first mobile entity 10 to thus at least partially satisfy the augmentation push request. Further, the method 100 may comprise, if the augmentation push request can be at least partially satisfied: transmitting a second augmentation data message to the first computing device. In examples, the second augmentation data message may comprise the portion of the representation of the field of view 21 obtained by the at least one sensor of the second mobile entity 20. With reference to **Fig. 2-A****,** the second computing device may be configured to determine that the first mobile entity 10 could need information included in the representation of the field of view 21 obtained by the at least one sensor of the second mobile entity 20 to derive a decision. In examples, the second computing device may be configured to generate a second augmentation definition and transmit the augmentation push request to the first mobile entity 10 and/or to a remote computing device configured to execute the computer implemented method according to the first aspect and/or to interrogate the unified environment model 32 to identify whether a portion of the representation of the field of view 21 of the second mobile entity can be combined with the representation of the field of view 11 of the first mobile entity 10 to thus at least partially satisfy the augmentation push request.

According to an embodiment, the computer implemented method 100 may comprise detecting, using the unified environment model 32, that the perception subsystem of the first mobile entity 10 should receive a representation of the field of view augmentation to satisfy a field of view requirement. The method 100 may comprise searching the unified environment model 32 for one or more portions of a representation of a field of view originating from the perception subsystem of one or more mobile entities that would satisfy the field of view requirement. The method 100 may comprise if one or more portions of a field of view originating from the perception subsystem of one or more mobile entities is discovered in the unified environment model 32 that would satisfy the field of view requirement: transmitting a third augmentation message to the computing device of the first mobile entity 10. In examples, a real-time and/or live monitoring of the first mobile entity 10 may be performed. In examples, the unified environment model 32 may be updated continuously or in predetermined time steps based on the representation of the field of view 11 obtained by the at least one sensor of the first mobile entity 10 the representation of the field of view obtained by the at least one sensor of the second mobile entity 20, and/or other mobile entities. In examples, detecting that the perceptions subsystem of the first mobile entity 10 should receive a representation of the field of view augmentation to satisfy a field of view requirement may pe performed on a remote computing device or a server. The remote computing device or server may comprise a data set or may be trained on the basis of a data set including various situations which may lead to the requirement of transmitting the third augmentation message to the computing device of the first mobile entity 10. The various situations may include imminent accidents or hazards for road users.

According to an embodiment, the computer implemented method 100 may comprise detecting, using the unified environment model 32, that the perception subsystem of the first mobile entity 10 should receive a representation of a field of view augmentation to satisfy a field of view requirement. Further, the method may comprise searching the unified environment model 20 for one or more portions of a representation of a field of view originating from the perception subsystem of one or more mobile entities that would satisfy the field of view requirement. The method may comprise if no portions of a representation of a field of view originating from the perception subsystem of one or more mobile entities is discovered in the unified environment model that would satisfy the field of view requirement: transmitting a warning message to the perception subsystem of the first mobile entity 10 indicating that the first mobile entity 10 should perform a safety action. This may be the case, when necessary information is missing in the unified environment model 32 to provide the perception subsystem of the first mobile entity 10 with an information or data basis on which the first computing device is able to compute a driving action. The safety action may comprise braking, stopping, and/or providing an acoustic and/or visual warning.

According to an embodiment, the computer implemented method 100 may comprise comparing at least the first and second perception messages to the unified environment model 32. The method may comprise computing, for at least the first and second perception messages, corresponding first and second fidelity metrics defining the extent to which the representations of the respective fields of view 11, 21 of the sensors of the first 10 and second mobile entities 20 correspond to the unified environment model 32. The method may comprise prioritising the fields of view 11, 21 of the sensors of at least the first 10 and second mobile entities 20 according to the first and second fidelity metrics. In examples, computing the corresponding first and second fidelity metrics may comprising determining a confidence level of the first and second perception message, respectively. In examples, a comparison of the unified environment model 32, the representation of the respective field of view 11 of the first mobile entity 10 and/or the representation of the respective field of view 21 of the second mobile entity 20 may be performed in order to determine differences in the data sets. The method may comprise determining a difference between the first virtual mobile entity environment model 12 or the second virtual mobile entity environment model 22 and the unified environment model 32 in order to compute the first fidelity metric and the second fidelity metric defining the extent to which the representations of the respective field of view of the sensor of the first mobile entity 10 or the second mobile entity 20 correspond to or differ from the unified environment model 32. In examples, if the fidelity metric of the representation of the field of view 11 of the first mobile entity 10 and/or the representation of the field of view 21 of the second mobile entity 20 is below a predetermined threshold, the method may comprise lower prioritizing the respective representation of the field of view in the unified environment model 32 or vice versa.

According to an embodiment, the computer implemented method may comprise receiving, from the first computing device and/or the second computing device, at least two perception messages each comprising a representation of substantially the same field of view and matching the representations of substantially the same field of view to improve the quality of the sensor data. This may be advantageous to reduce the error rate of the sensor data comprised in the at least two perception messages and/or to enhance signal to noise ratio.

According to an embodiment, the method may comprise receiving a physical model from a physical model server, wherein the physical model comprises at least one layer. The method may comprise registering the physical model to the unified environment model 32. In examples, the physical model may comprise a plurality of layers. In examples, the at least one layer may comprise a building layer, a vulnerable users layer, a road layer, and/or a mobile entity layer. In examples, the message transmitted 116 to the first computing device may comprise information included in the at least one layer. In examples, the message comprising at least the portion of the representation of the field of view 21 obtained by the sensor of the second mobile entity 20 and transmitted 116 to the first computing device maybe associated with the at least one layer. In examples, the plurality of layers may comprise the building layer, the vulnerable users layer, the road layer, and/or the mobile entity layer. In examples, the first computing device and/or the second computing device may be configured to request data associated with a layer of the at least one layer.

According to an embodiment, the computer implemented method of central sensor augmentation may be used for autonomous and/or assisted driving.

According to the second aspect, the computer implemented method of peripheral sensor augmentation comprises generating a first perception message from a first computing device comprised in a first mobile entity 10. The first perception message is generated by a perception subsystem of the first mobile entity 10, and wherein the first perception message comprises at least a location of the first mobile entity 10, and a representation of a field of view of at least one sensor of the first mobile entity 10. The method comprises transmitting the first perception message to a host device comprising a central sensor augmentation application. The method comprises receiving, at the first computing device, a message comprising at least a portion of a representation of a field of view 21 obtained by at least one sensor of a second mobile entity 20 and/or an update of an environment model 32. The method comprises generating a control signal associated with a driving action of the first mobile entity 10 using at least the message comprising at least the portion of the representation of the field of view 22 obtained by the at least one sensor of the second mobile entity 20. In examples, the host device may comprise a remote computing device or a server. In examples, the central sensor augmentation application may be at least partially the method according to the first aspect. In examples, using at least the message comprising at least the portion of the representation of the field of view 21 obtained by the at least one sensor of the second mobile entity 20 may comprise the extending the representation of the field of view 11 obtained by the at least one sensor of the first mobile entity 10. In examples, using at least a message comprising at least the portion of the representation of the field of view 21 obtained by at least one sensor of the second mobile entity 20 may comprise generating a representation of an augmented field of view combining the representation of the field of view 11 of the at least one sensor of the first mobile entity 10 with at least a portion of the representation of the field of view 21 obtained by the at least one sensor of the second mobile entity 20, to thus generate a representation of an augmented field of view available to the perception subsystem of the first mobile entity 10. The driving action may comprise accelerating, braking, slowing down, turning, changing lanes, merging such as entering a traffic lane from a different lane, passing, parking, u-turning, maintaining speed, etc., or a combination thereof. The method of peripheral sensor augmentation may be performed on the first computing device and/or the perception subsystem of the first mobile entity 10.

According to an embodiment, the computer implemented method according to the second aspect may comprise detecting, using at least the perception subsystem of the first mobile entity 10, that the perception subsystem of the first mobile entity 10 requires an augmentation to its representation of the field of view. The method may comprise computing, using the perception subsystem of the first mobile entity 10, a boundary of a desired representation of the augmented field of view of the first mobile entity 10. The method may comprise generating a first augmentation definition associated with the computed boundary of the desired representation of the augmented field of view of the first mobile entity 10. The method may comprise transmitting the augmentation definition to the host device comprising the central sensor augmentation application. In examples, the detecting may be based on a steering action which may require an augmentation to its representation of the field of view because of a changed driving direction. In examples, the detecting may be based on occurrence of a blind spot due to a changed traffic situation or newly appearing road users restricting the field of view, which may require an augmentation to its representation of the field of view of the first mobile entity 10.

According to the third aspect, the computing device comprises at least one sensor comprising a representation of a field of view in a physical environment, a perception subsystem, a processor, and a first communication interface configured to be connected to a first radio transmitter. The perception subsystem is configured to obtain sensor measurements from the at least one sensor, and to generate a perception message comprising at least a location of a first mobile entity 10, and a representation of a field of view 11 of at least one sensor of the first mobile entity 10. The first communication interface is configured to transmit the perception message to a host device comprising a central sensor augmentation application. The first communication interface is configured to receive a message comprising at least a portion of a representation of a field of view 21 obtained by at least one sensor of a second mobile entity 20. The processor is configured to generate a control signal associated with a driving action of the first mobile entity 10 using at least the message comprising at least the portion of the representation of the field of view 21 obtained by the at least one sensor of the second mobile entity 20. Further, the computing device may comprise a power source. The computing device may comprise a volatile and/or non-volatile memory. The computing device may be configured to receive management information via a data communications network.

According to a fourth aspect, the remote computing device comprises a processor and
a second communication interface configured to be connected to a second radio transmitter. The second communication interface is configured to receive a first perception message from a first computing device comprised in a first mobile entity 10. The first perception message is generated by a perception subsystem of the first mobile entity 10. The first perception message comprises at least a location of the first mobile entity 10, and a representation of a field of view of at least one sensor of the first mobile entity 10. The second communication interface is configured to receive a second perception message from a second computing device comprised in a second mobile entity 20. The second perception message is generated by a perception subsystem of the second mobile entity 20, and wherein the second perception message comprises at least a location of the second mobile entity 20, and a representation of a field of view of at least one sensor of the second mobile entity 20. The processor is configured to update first 12 and second virtual mobile entity environment models 22 of the first 10 and second mobile entities 20 using at least the sensor data comprised in the first and second perception messages, respectively. The processor is configured to incorporate at least the first 12 and second virtual mobile entity environment models 22 into a unified environment model 32. The first 12 and second virtual mobile entity environment models 22 are registered to a common coordinate system. The processor is configured to generate a representation of an augmented field of view in the unified environment model 32 comprising at least a portion of the field of view 21 obtained by the at least one sensor of the second mobile entity 20. The second communication interface is configured to transmit, to the first computing device, a message comprising at least the portion of the representation of the field of view 21 obtained by the sensor of the second mobile entity 20 used in the representation of the augmented field of view. In examples, the remote computing device may comprise a remote server, cloud service, or an edge device. In examples, the remote computing device may comprise a 5G core network or may be linked to a 5G core network.

According to the fifth aspect, the computer program product comprises instructions which, when the program is executed by a processor, cause the processor to carry out the method of the first aspect and/or the second aspect.

According to the sixth aspect, the computer-readable medium comprises instructions which, when executed by a processor, cause the processor to carry out the method of the first aspect and/or the second aspect.

The examples provided in the drawings and described in the foregoing written description are intended for providing an understanding of the principles of this specification. No limitation to the scope of the appended claims is intended thereby. The present specification describes alterations and modifications to the illustrated examples. Only the preferred examples have been presented, and all changes, modifications, and further applications to these within the scope of the specification are desired to be protected.

## Claims

1. A computer implemented method (100) of central sensor augmentation comprising:
- receiving (111) a first perception message from a first computing device comprised in a first mobile entity (10), wherein the first perception message is generated by a perception subsystem of the first mobile entity (10), and wherein the first perception message comprises at least a location of the first mobile entity (10), and a representation of a field of view (11) of at least one sensor of the first mobile entity (10);
- receiving (112) a second perception message from a second computing device comprised in a second mobile entity (20), wherein the second perception message is generated by a perception subsystem of the second mobile entity (20), and wherein the second perception message comprises at least a location of the second mobile entity (20), and a representation of a field of view (21) of at least one sensor of the second mobile entity (20);
- updating (113) first (12) and second virtual mobile entity environment models (22) of the first (10) and second mobile entities (20) using at least the sensor data comprised in the first and second perception messages, respectively;
- incorporating (114) at least the first (12) and second virtual mobile entity environment models (22) into a unified environment model (32); wherein the first (12) and second virtual mobile entity environment models (22) are registered to a common coordinate system;
- generating (115), for at least the first computing device, a representation of an augmented field of view in the unified environment model (32) comprising at least a portion of the field of view (21) obtained by the at least one sensor of the second mobile entity (20); and
- transmitting (116), to the first computing device, a message comprising at least the portion of the representation of the field of view (21) obtained by the sensor of the second mobile entity (20) used in the representation of the augmented field of view.

2. The computer implemented method (100) according to claim 1, further comprising:
- receiving an augmentation request message from the first computing device of the first mobile entity (10), wherein the augmentation request message comprises a first augmentation definition associated with a boundary of a desired representation of an augmented field of view of the first mobile entity (10);
- interrogating the unified environment model (32) to identify whether a portion of the field of view (21) obtained by the at least one sensor of the second mobile entity (20) can be combined with the field of view (11) of the at least one sensor of the first mobile entity (10) to thus at least partially satisfy the augmentation definition; and
if the augmentation definition can be at least partially satisfied: transmitting a first augmentation data message to the first computing device, wherein the first augmentation data message comprises the portion of the field of view (21) obtained by the at least one sensor of the second mobile entity (20).

3. The computer implemented method (100) according to one of claims 1 or 2, further comprising:
- receiving, from the second computing device of the second mobile entity (20), an augmentation push request to the first mobile entity (10), wherein the augmentation push request comprises a second augmentation definition associated with a boundary of a desired representation of an augmented field of view of the first mobile entity (10);
- interrogating the unified environment model (32) to identify whether a portion of the field of view (21) obtained by the at least one sensor of the second mobile entity (20) can be combined with the field of view (11) of the at least one sensor of the first mobile entity (10) to thus at least partially satisfy the augmentation push request; and
if the augmentation push request can be at least partially satisfied: transmitting a second augmentation data message to the first computing device, wherein the second augmentation data message comprises the portion of the field of view (21) obtained by the at least one sensor of the second mobile entity (20).

4. The computer implemented method according to one of the preceding claims, further comprising:
- detecting, using the unified environment model (32), that the perception subsystem of the first mobile entity (10) should receive a field of view augmentation to satisfy a field of view requirement;
- searching the unified environment model (32) for one or more portions of a field of view originating from the perception subsystem of one or more mobile entities that would satisfy the field of view requirement; and
- if one or more portions of a field of view originating from the perception subsystem of one or more mobile entities is discovered in the unified environment model that would satisfy the field of view requirement: transmitting a third augmentation message to the computing device of the first mobile entity (10).

5. The computer implemented method (200) according to one of claims 1 to 3, further comprising:
- detecting, using the unified environment model (32), that the perception subsystem of the first mobile entity (10) should receive a field of view augmentation to satisfy a field of view requirement;
- searching the unified environment model (20) for one or more portions of a field of view originating from the perception subsystem of one or more mobile entities that would satisfy the field of view requirement; and
if no portions of a field of view originating from the perception subsystem of one or more mobile entities is discovered in the unified environment model that would satisfy the field of view requirement: transmitting a warning message to the perception subsystem of the first mobile entity (10) indicating that the first mobile entity (10) should perform a safety action.

6. The computer implemented method according to one of the preceding claims, further comprising:
- comparing at least the first and second perception messages to the unified environment model (32);
- computing, for at least the first and second perception messages, corresponding first and second fidelity metrics defining the extent to which the representations of the respective fields of view (11, 21) of the sensors of the first (10) and second mobile entities (20) correspond to the unified environment model (32); and optionally:
prioritising the fields of view (11, 21) of the sensors of at least the first (10) and second mobile entities (20) according to the first and second fidelity metrics.

7. The computer implemented method according to one of the preceding claims, further comprising:
- receiving, from the first computing device and/or the second computing device, at least two perception messages each comprising a representation of substantially the same field of view; and
- matching the representations of substantially the same field of view to improve the quality of sensor data comprised in the at least two perception messages.

8. The computer implemented method according to one of the preceding claims, further comprising:
- receiving a physical model from a physical model server, wherein the physical model comprises at least one layer; and
- registering the physical model to the unified environment model (32);
wherein the physical model optionally comprises a plurality of layers.

9. The computer-implemented method according to one of the preceding claims, wherein the computer implemented method of central sensor augmentation is used for autonomous and/or assisted driving.

10. A computer implemented method of peripheral sensor augmentation, comprising:
- generating a first perception message from a first computing device comprised in a first mobile entity (10), wherein the first perception message is generated by a perception subsystem of the first mobile entity (10), and wherein the first perception message comprises at least a location of the first mobile entity (10), and a representation of a field of view (11) of at least one sensor of the first mobile entity (10);
- transmitting the first perception message to a host device comprising a central sensor augmentation application;
- receiving, at the first computing device, a message comprising at least a portion of a representation of field of view (21) obtained by at least one sensor of a second mobile entity (20) and/or an update of an environment model (32); and
- generating a control signal associated with a driving action of the first mobile entity (10) using at least the message comprising at least the portion of the presentation the field of view (21) obtained by the at least one sensor of the second mobile entity (20).

11. The computer implemented method according to claim 10, further comprising:
wherein generating the first perception message comprises:
- detecting, using at least the perception subsystem of the first mobile entity (10), that the perception subsystem of the first mobile entity (10) requires an augmentation to its field of view (11);
- computing, using the perception subsystem of the first mobile entity (10), a boundary of a desired representation of an augmented field of view of the first mobile entity (10);
- generating a first augmentation definition associated with the computed boundary of the desired representation of the augmented field of view of the first mobile entity (10); and
- transmitting the augmentation definition to the host device comprising the central sensor augmentation application.

12. A computing device comprising:
- at least one sensor comprising a representation of a field of view in a physical environment;
- a perception subsystem;
- a processor; and
- a first communication interface configured to be connected to a first radio transmitter;
wherein the perception subsystem is configured to obtain sensor measurements from the at least one sensor, and to generate a perception message comprising at least a location of a first mobile entity (10), and a representation of a field of view (11) of at least one sensor of the first mobile entity (10);
wherein the first communication interface is configured to transmit the perception message to a host device comprising a central sensor augmentation application;
wherein the first communication interface is configured to receive a message comprising at least a portion of a representation of a field of view (21) obtained by at least one sensor of a second mobile entity (20); and
wherein the processor is configured to generate a control signal associated with a driving action of the first mobile entity (10) using at least the message comprising at least the portion of the representation of the field of view (21) obtained by the at least one sensor of the second mobile entity (20).

13. A remote computing device comprising:
- a processor; and
- a second communication interface configured to be connected to a second radio transmitter;
wherein the second communication interface is configured to receive a first perception message from a first computing device comprised in a first mobile entity (10), wherein the first perception message is generated by a perception subsystem of the first mobile entity (10), and wherein the first perception message comprises at least a location of the first mobile entity (10), and a representation of a field of view (11) of at least one sensor of the first mobile entity (10);
wherein the second communication interface is configured to receive a second perception message from a second computing device comprised in a second mobile entity (20), wherein the second perception message is generated by a perception subsystem of the second mobile entity (20), and wherein the second perception message comprises at least a location of the second mobile entity (20), and a representation of a field of view (21) of at least one sensor of the second mobile entity (20);
wherein the processor is configured to update first (12) and second virtual mobile entity environment models (22) of the first (10) and second mobile entities (20) using at least the sensor data comprised in the first and second perception messages, respectively;
wherein the processor is configured to incorporate at least the first (12) and second virtual mobile entity environment models (22) into a unified environment model (32); wherein the first (12) and second virtual mobile entity environment models (22) are registered to a common coordinate system;
wherein the processor is configured to generate a representation of an augmented field of view in the unified environment model (32) comprising at least a portion of the representation of the field of view (21) obtained by the at least one sensor of the second mobile entity (20); and
wherein the second communication interface is configured to transmit, to the first computing device, a message comprising at least the portion of the representation of the field of view (21) obtained by the sensor of the second mobile entity (20) used in the representation of the augmented field of view.

14. A computer program product comprising instructions which, when the program is executed by a processor, cause the processor to perform the steps of computer implemented method claims 1 to 9, and/or 10-11.

15. A computer-readable medium comprising instructions which, when executed by a processor, cause the processor to perform the steps of computer implemented method claims 1 to 9, and/or 10-11.
